Europäisches Patentamt

European Patent Office

Office européen des brevets

(19)

(11) Publication number: **0 010 124**
**B1**

(12) **EUROPEAN PATENT SPECIFICATION**

(45) Date of publication of patent specification: **07.03.84**

(51) Int. Cl.³: **G 03 B 27/54,** G 03 B 27/16

(21) Application number: **79102722.0**

(22) Date of filing: **31.07.79**

(54) Illumination apparatus.

(30) Priority: **02.08.78 US 930284**
**02.08.78 US 930287**

(43) Date of publication of application:
**30.04.80 Bulletin 80/9**

(45) Publication of the grant of the patent:
**07.03.84 Bulletin 84/10**

(84) Designated Contracting States:
**CH DE FR GB IT**

(56) References cited:
**DE - A - 1 904 924**
**DE - B - 1 168 243**
**FR - A - 942 086**
**US - A - 3 982 116**

(73) Proprietor: **EASTMAN KODAK COMPANY**
**343 State Street**
**Rochester New York 14650 (US)**

(72) Inventor: **Bloemendaal, John F.**
**Kodak Park**
**Rochester, New York (US)**
Inventor: **Boone, Arthur M.**
**Kodak Park**
**Rochester, New York (US)**
Inventor: **Zanolli, Alexander B.**
**Kodak Park**
**Rochester, New York (US)**

(74) Representative: **Blickle, K. Werner, Dipl.-Ing. et al,**
**KODAK AKTIENGESELLSCHAFT Postfach 369**
**D-7000 Stuttgart 60 (DE)**

Courier Press, Leamington Spa, England.

Illumination apparatus

This invention relates to an illumination apparatus, especially for a photographic printer, which apparatus has an elongated light source disposed within and parallel to reflecting surfaces of an elongated reflector positioned to illuminate the entire surface of an object, which is supported in spaced relationship with the light source and the reflector.

Apparatus for illuminating an original generally falls into two categories, each adapted to achieve the same result by a different engineering approach. A first approach involves illuminating a slit through which the original is line-imaged by an optical system upon a photosensitive surface. Either the original moves past the illuminated slit or the slit moves over a stationary original to achieve the same result. In both cases the image is built up line by line on the photosensitive surface. The second approach involves illuminating an entire copy plane in which the original is positioned. This second approach requires at least a momentary phase in the copy cycle when all parts of the original may be simultaneously imaged on the photosensitive surface, i.e. the image of the document is at least momentarily stationary with respect to the photosensitive surface. For example, a short exposure of the original effectively "freezes" motion with respect to a moving photosensitive belt.

Examplary of the first approach is United States Patent No. 3,982,116 which discloses an illumination system for a printer comprising an elongated light source with an arrangement of elongated reflectors for reflecting a light through a slit defined transversely to a copy platen. The reflectors (mirrors) surrounding the light source are designed to converge light rays to a line focus beyond the slit. By placing an original on the platen, and moving the platen relative to the slit, the converging light rays scan the surface of the original.

The second approach is illustrated by a copy machine described in the United States Patent No. 3,586,849. In such a machine, an original is placed upon a transparent support platen mounted relative to an illumination lamp assembly. In order to provide homogeneous illumination, four lamps are orthogonally spaced around each edge of the original. By means of reflectors with compound surfaces (i.e., both planar and curved surfaces), light rays emitted from each lamp are reflected upon the surface of the original such that they overlap and complement rays from the opposing lamp. The light rays reflect upon the surface of the original and produce image light corresponding to the informational areas on the original. The image light traverses an optical system and exposes the photosensitive surface of a flexible photoconductive belt arranged on a belt assembly.

The problem solved by this invention is to provide an illumination apparatus for efficiently using light emitted from a single light source to uniformly illuminate an original and which illumination apparatus consists of only a small number of components. This problem is solved in that the light source and the reflector are arranged to form separated light beams of collimated light rays, and each of two reflectors, positioned between the light source and the object reflects one of the separated light beams onto the object to illuminate the entire surface thereof.

Preferably, the reflector consists of two elongated parabolic reflecting surfaces positioned substantially parallel and adjacent to the light source. For this reason, the light source is positioned substantially in the line of focus of the two reflecting surfaces of the reflector.

A preferred embodiment of the invention will be described with reference to the figures, wherein:

Fig. 1 is a schematic plan view of a presently preferred embodiment of the invention;

Figure 2 is a perspective view of the illumination apparatus applied to a photographic printer;

Figure 3 is a geometrical representation of the parabolic mirrors used in the disclosed embodiment;

Figure 4 is a schematic plan view of a further preferred embodiment of the invention; and

Figure 5 is a top elevation taken in perspective to emphasize structural features of the disclosed embodiment according to Figure 4.

Because illumination apparatus in general are well known, as are photographic and other copying machines, the present description will be directed in particular to elements forming part of, or cooperating more directly with, the present invention. Elements not specifically shown or described may take various forms well known to those skilled in the art.

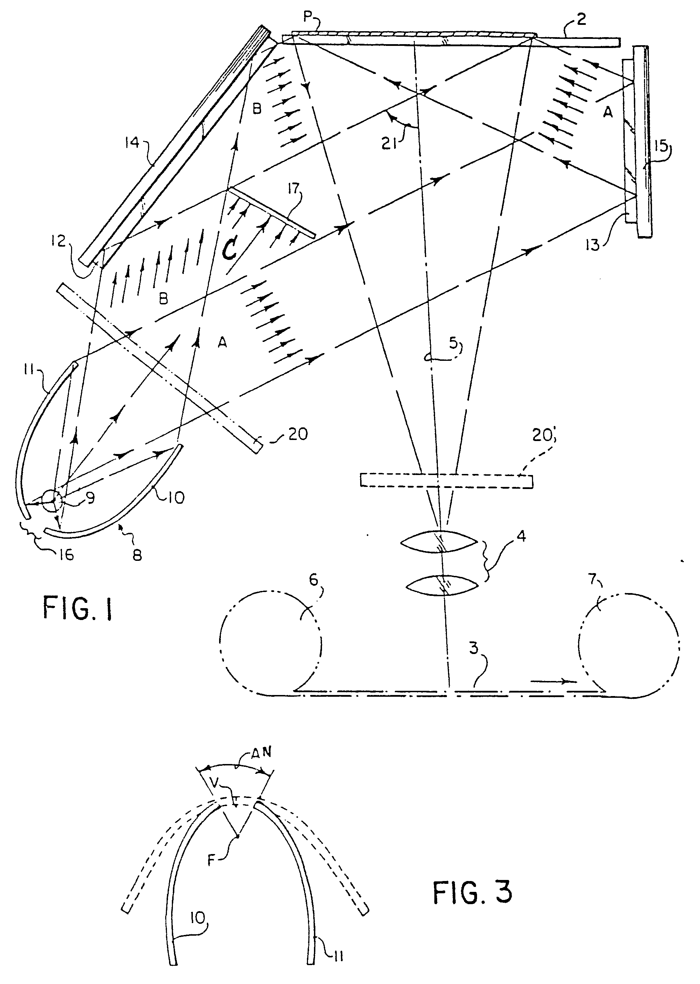

Referring particularly to Figure 1, the illumination apparatus is illustrated as a component in a copy machine. For purposes of illustration, the copy machine is embodied as a photographic printer for producing copies of photographic prints. An original to be reproduced, such as a planar, rectangular print P, is positioned on a transparent copy platen 2 for casting an image on a photosensitive material 3 through a focusing lens 4. The print P is placed on the copy platen 2, as for example, by hand or by suitable transport apparatus (not shown). Being an opaque copy, the print P is imaged in the printer by means of reflected light. As shown, the reflected light generally follows an optical axis 5 of the printer. Therefore, it is desirable that the illumination apparatus not obstruct reflected light passing along the optical axis 5.

The focusing lens 4 can be of any known design which will produce a sharp image on the photosensitive material 3. As shown in phantom the photosensitive material 3 may be a continuous web of photographic paper transported between a supply reel 6 and a take-up reel 7. The reels may be rotated to advance the paper incrementally in conjunction with the placement, and repeated exposure, of prints on the copy platen 2. Apparatus for producing such cyclical and interlocked motion are well known in the art of copiers generally and, more particularly, in the art of photographic printing. After the entire roll of paper is exposed, and the latent images are processed in the usual manner and the individual prints are separated for return to the customer.

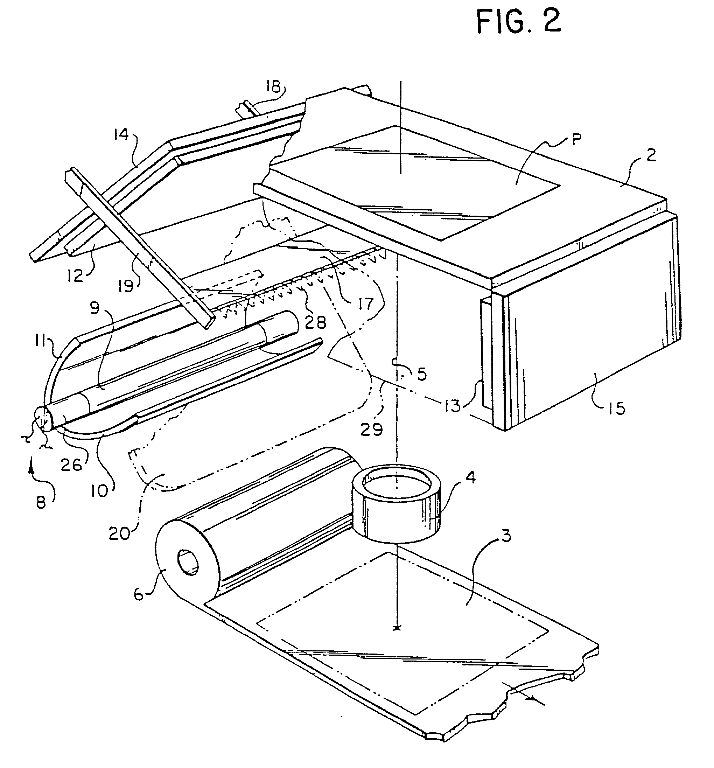

Referring jointly to Figures 1 and 2, the illumination apparatus includes a lamphouse 8 having an elongated light source 9 partially surrounded by a reflector comprising two half-parabolic reflectors 10 and 11. The light source preferably comprises a small diameter elongated tubular element, such as for example a Xenon-arc tubular lamp, which is electrically connected to a suitable power source (not shown). The light source is positioned in a suitable support, such as the support 26 illustrated in Figure 2. Because as earlier mentioned, the optical axis 5 of the printer optical system must not be obstructed, the lamphouse 8 is canted to one side of the axis 5, as best illustrated in Figure 1.

A pair of planar reflectors 12 and 13 are provided adjoining the copy platen 2 for reflecting light from the lamphouse 8 to the copy platen 2. Being transparent, the platen 2 permits light to substantially transmit through and illuminate the print P. Each mirror 12 and 13 is aluminum coated so that absorption and dispersion is minimized to produce high efficiency reflection of the impinging light rays. The mirrors 12 and 13 are mounted on supporting members 14 and 15, respectively. Each support 14 and 15 is positioned with respect to the copy platen 2 so that at least the area bounded by the print P is fully illuminated by light reflected from each of the mirrors 12 and 13. The amount of inclination of the mirror 12 with respect to the copy platen 2 is a function of the angle of reflection of impinging light rays upon the mirror 12. Similarly the inclination of the mirror 13 depends on the angle of the rays impinging upon it.

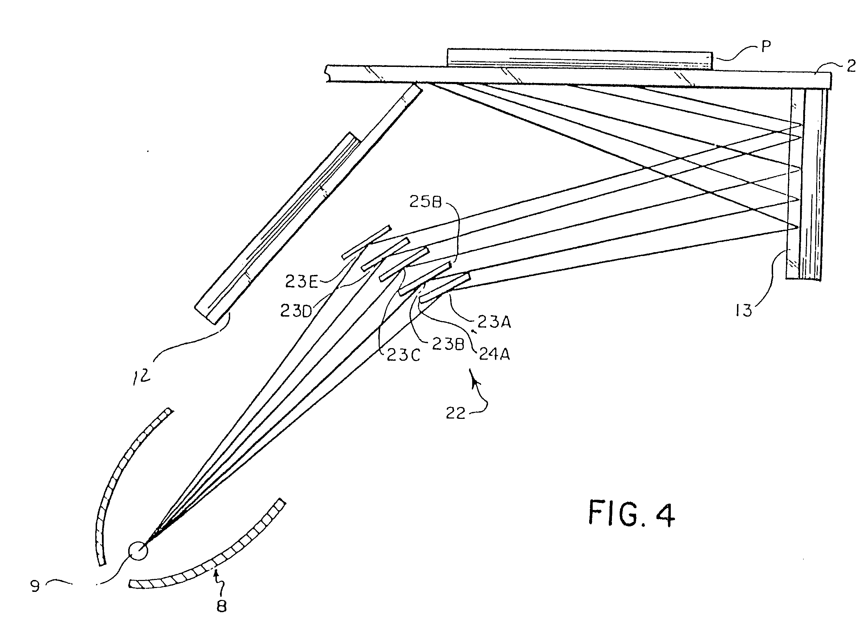

The light source 9 is partially surrounded by the pair of parabolic reflectors 10 and 11. As shown by geometrical representation in Figure 3, each parabolic reflector 10 and 11 represents half of a fully parabolic surface (shown in dash-dotted lines in Figure 3) that is separated at its vertex V and rotated about its focus axis F by an angle AN. The halves thus remaining each coincide with half of a separately positioned new parabola. The optimum angle AN will vary depending on the orientation of all the mirrors in the optical system; however, an angle of 50° was found to be satisfactory in the disclosed embodiment.

The light source 9 is placed substantially in the line of focus F of both reflectors. Since the parabolic surfaces are cylindrical in their lengthwise direction the principal focus is also linear. Therefore the length of source 9 is closely aligned with the linear focus of the half parabolic segments 10 and 11. As is well known, light rays which emanate from a point source at the focus of a parabolic mirror are collimated, i.e., parallel, after they reflect from its surface. The light source 9, being nominally at the focus of each of the parabolic mirrors 10 and 11, emits light rays which reflect from each mirror as two separate bundles of substantially parallel rays. The separation of light rays into two bundles is effected by the use of two half-parabolic reflectors positioned as previously described to have a common focus line (see Figure 3).

By thus separating the reflecting surfaces, a gap — denoted by reference character 16 — is formed between reflectors 10 and 11. It may be desirable to prevent light rays from directly reaching the platen from the light source 9. These rays are not collimated and could affect achieving a high degree of uniform distribution of illumination in the platen. A light baffle 17 can be provided between the light source 9 and the copy platen 2 to absorb or reflect the direct light rays. As best shown in Figure 2, the baffle 17 is attached to the copy platen 2 by means of a pair of brackets 18 and 19.

Particularly in a photographic printer, it may be desirable to provide color filtration for light striking the print P. For example, the spectral characteristics of the lamp 9 may not match that of the photographic material 3 and filter compensation will need to be provided. Also, since spectral characteristics of the lamp 9 may change with lamp age, it may be necessary to periodically adjust the amount of filtration. Having but one light source 9 simplifies the filtration in comparison with conventional systems using a plurality of lamps (usually four). By providing a color filter 20 in the path of light emanating from the lamphouse 8, all light striking the print P — and thus the photographic material 3 — is effectively modified as to spectral characteristics. Alternatively or additionally, a filter may be placed between the print P and the photosensitive material 3 — as depicted by reference character 20′ — to correct reflected image light reflected from the print P. However the filter 20 has been found satisfactory for printing from prints onto photographic paper. In any event, the selection and placement of the filter(s) is within the capability of those skilled in the art.

The operation of the illumination apparatus can best be described in terms of the light ray pattern illustrated in Figure 1. The bundle A of light rays reflect from the parabolic mirror 11 to the planar reflector 13. From there the rays reflect back across the copy platen 2 and illuminate the print P. The bundle B of light rays reflect from the parabolic mirror 10 to the planar reflector 12. From there the rays reflect back across the copy platen 2 and also illuminate the print P. It will be noted that the light rays in each bundle remain substantially parallel after each reflection. Therefore light intensity per unit area due to impinging rays is substantially constant across the length and width of the print P. Furthermore, the intensity pattern of each bundle A and B of light rays substantially complement each other on the face of the copy platen 2 — and therefore on the face of print P — making the illumination on the print substantially uniform.

It was found that certain angles of incidence of the light rays caused deleterious effects in the photographic image on the photosensitive material 3. For example, if the angle of light incidence relative to the optical axis 5 — as indicated by a reference character 21 — is less than about 65°, specular reflection may occur on the surface of the print P and reflect directly into the optical system through the lens 4 and onto the photosensitive material 3. This effect is particularly pronounced if the print P has a strongly textured surface. Consequently, the illumination apparatus is designed to bring light rays onto the copy platen 2 at an angle of at least 65°. This angle, and any greater angle, was found to prevent the unwanted specular reflection. Lesser angles increase specular reflection in the case of textured prints; however such angles may be acceptable if non-textured prints are being illuminated.

Some of the light rays emanate directly from the light source 9 without striking the parabolic reflectors 10 or 11. A portion of these rays strike the planar reflectors 12 or 13 and, because of their angle of incidence, either reflect out of the illumination apparatus or contribute to the illumination of the print P. Those rays illuminating the print P are few compared to the collimated rays and are effectively swamped by the latter so that uniform illumination remains unaffected. Furthermore, the angle at which these rays impinge on the print P is at least 65° relative to the optical axis 5 so that the aforementioned specular reflection is not a problem. However, another portion of these direct light rays could strike the copy platen 2 — and therefore the print P — without reflecting from any surface. These rays will impinge at an angle substantially less than 65° and therefore cause serious specular reflection from a print P that is strongly textured. The use of the light baffle 17 is optional. However, it is a preferred feature when extremely uniform distribution is desired over the entire surface of the illuminated object. When the light baffle is used it is positioned to block direct rays from striking the copy platen 2. The light baffle 17 also prevents the portion of direct rays causing specular reflection from striking the print P. While the baffle 17 may be a rectangular plate for purposes of blocking direct rays, in some orientations of the components in the system it was found beneficial if the baffle 17 was provided with teeth 28 (see Figure 2). It is believed that the toothed edge diffuses the light rays and thereby provides better illumination of the edge of the print P. The light baffle can alternatively be made of diffusing material in order to diffuse the direct light rays.

Also it will be apparent that the disclosed apparatus can be used with various types of originals other than prints, e.g., positive or negative transparencies, plain paper originals, etc. While the disclosed illumination apparatus has been described with reference to a photographic printer it will be apparent to those skilled in the art that it is not limited to this specific application. For example, in Figure 1 the photosensitive surface 3 could equally well be the photoconductive surface of an electrographic belt assembly. After exposure to the original, the belt 3 could be advanced through conventional electrographic processing stations, e.g., toning and developing, image transfer, cleaning, charging, etc.

The bundles A and B of light rays reflected from the parabolic reflectors 10 and 11 include light paths collimated in relation to the thickness of cross-section of each bundle. However, each bundle includes light rays that are travelling obliquely across the width-wise dimension of the bundle, i.e., the dimension perpendicular to the plane of Figure 1. Such rays appear collimated in cross-section (as shown in Figure 1) while diverging from the useful portion of the bundle and generally bearing off the axis of the lamp 9. These rays leave the illumination apparatus without striking the planar reflectors 12 and 13. Such rays may instead be collected by a pair of end reflectors 29 (shown in cutaway phantom on one side only in Figure 2) and diverted back toward the planar reflectors 12 and 13. From there the light rays reflect back upon the copy platen 2, thereby contributing to illumination of the print P.

Figure 4 illustrates a further preferred embodiment of a modification to the light baffle 17, showing only those rays in the bundle C illustrated in Figure 1. A light deflector 22 is positioned in place of the light baffle 17, preventing direct impingement of rays on the copy platen 2 while using the intercepted light energy in the system.

The light deflector 22 is composed of a group of elongate, planar, reflective louvers, referred to as deflectors 23A to 23E, that are juxtaposed in the path of light rays radiating from the light source 9 directly toward the print P. Each deflector 23A to 23E has a highly reflective surface facing the light source 9 disposed to efficiently reflect incident light rays. The leading edge (edge closest to the light source 9) of each deflector 23 — such as the leading edge 24A of the deflector 23A — is positioned overlapping, or at least in line, with the trailing edge of the adjacent deflector — such as the trailing edge 25B of the deflector 23B. Light rays emanating directly from the source therefore do not pass between the deflectors 23 without striking one of the reflecting surfaces and are thereby prevented from directly striking the copy platen 2. Instead, the light rays are reflected from each deflector 23 to the planar reflector 13, and from there upon the copy platen 2. Importantly, these light rays are directed upon the copy platen 2 at an angle of incidence comparable to that of the collimated bundles of light rays A and B. Therefore, the direct light rays from the source 9 are being used to illuminate the print P without having such an angle of incidence as to cause specular reflection.

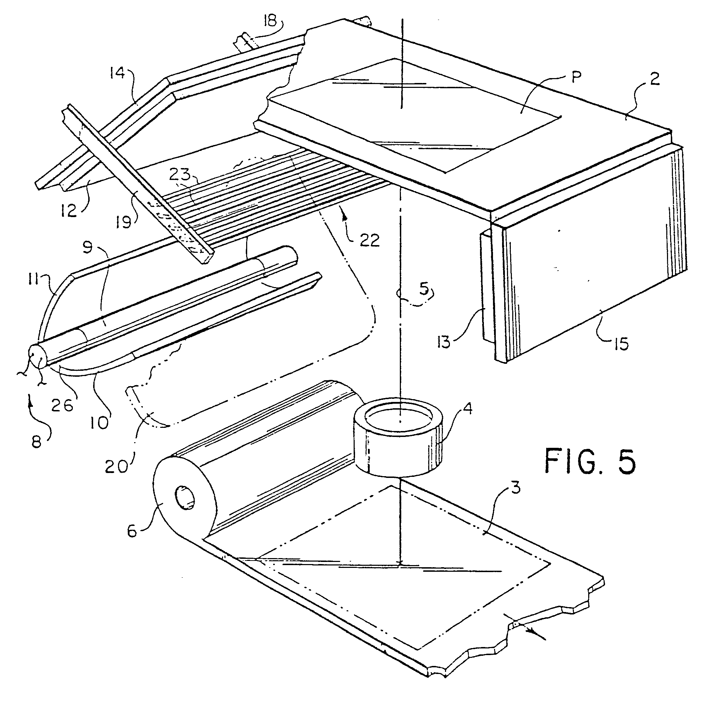

Referring now to Figure 5, the embodiment is illustrated in perspective form. There it is seen that the light deflector 22 is attached to the copy platen 2 by means of a pair of brackets 18 and 19. Each bracket 18 and 19 supports individual deflectors 23 at their respective ends in a spaced relationship best described as analogous to a louver or "venetian blind" shutter. The proper orientation of each reflector 23 can be ascertained by routine manipulation within the capability of those of ordinary skill in this art. In practice an optimum orientation can be selected, and the reflectors 23 are then manufactured in place rather than being adjustable by the user.

The operation of the illumination apparatus can best be described in terms of the light ray pattern illustrated in Figures 1 and 4. The bundle A of light rays reflect from the parabolic mirror 11 to the planar reflector 13. From there the rays reflect back across the copy platen 2 and illuminate the print P. The bundle B of light rays reflect from the parabolic mirror 10 to the planar reflector 12. From there the rays reflect back across the copy platen 2 and also illuminate the print P. It will be noted that the light rays in each bundle remain substantially parallel after each reflection. Therefore, light intensity per unit area due to impinging rays from bundles A and B is substantially constant across the length and width of the print P. Furthermore, the intensity pattern of each bundle A and B of light rays substantially complement each other on the face of the copy platen 2 — and therefore on the face of print P — making the illumination on the print substantially uniform.

The bundle C of light rays also emanates from the light source 9 and directly bears toward the print P without striking any of the reflectors 10, 11, 12, or 13. These rays instead encounter the louvered reflective surfaces of the deflector 22. Analogous to an ordinary venetian blind that is closed to block direct rays of the sun, the light rays in the bundle C cannot freely pass the deflector 22. Instead, the rays strike the surfaces of the deflectors 23A through E and reflect to the mirror 13. From there the rays reflect back across the copy platen 2 and contribute to illumination of print P. In so doing, the incident angle of the rays in the bundle C have been modified to exceed the critical angle causing specular reflection upon the photosensitive material 3. Thus, a greater amount of light energy than is possible in Figure 1 is used to illuminate the print P and efficiency is accordingly increased. All this is accomplished without deleterious effect to the image of the print P on the photosensitive material 3.

Also it will be apparent that the disclosed apparatus can be used with various types of originals other than prints, e.g., positive or negative transparencies. Ordinary plain paper originals may be illuminated by this apparatus. While the disclosed illumination apparatus has been described with reference to a photographic printer, it will be apparent to those skilled in the art that it is not limited to this specific application. For example, in Figure 1 the photosensitive surface 3 could equally well be the photoconductive surface of an electrographic belt assembly. After exposure to the copy original 1, the belt 3 could be advanced through conventional electrographic processing stations, e.g., toning and developing, image transfer, cleaning, charging, etc.

## Claims

1. Illumination apparatus, especially for a photographic printer, which apparatus has an elongated light source (9) disposed within and parallel to reflecting surfaces of an elongated reflector (10, 11) positioned to illuminate the entire surface of an object (P), which is supported in spaced relationship with the light source and the reflector, characterized in that the light source (9) and the reflector (10, 11) are arranged to form separated light beams (A and B) of collimated light rays, and each of two reflectors (12, 13), positioned between the light source and the object (P), reflects one of the separated light beams (A and B) onto the object to illuminate the entire surface thereof.

2. Illumination apparatus as claimed in claim 1, characterized in that the reflector (10, 11) consists of two elongated parabolic reflecting surfaces positioned substantially parallel and adjacent to said light source (9).

3. Illumination apparatus as claimed in claims 1 and 2, characterized in that the light source (9) and the parabolic reflecting surface (10, 11) are positioned outside the optical axis (5) of the printer optical system.

4. Illumination apparatus as claimed in claims 1 to 3, characterized in that means for absorbing or reflecting light rays (A and B) is positioned in the path of light rays (C) which pass directly between the light source (9) and the object (P).

5. Illumination apparatus as claimed in claim 4, characterized in that the means for absorbing or reflecting light rays (C) which pass directly between the light source (9) and the object (P) consists of a light baffle (17).

6. Illumination apparatus as claimed in claim 4, characterized in that the means for absorbing or reflecting rays (C) which pass directly between the light source (9) and the object (P) consists of a louvered reflector (22).

7. Illumination apparatus as claimed in claim 6, characterized in that said louvered reflector (22) comprises a plurality of elongated planar reflecting surfaces (mirrors) (23A, 23B, 23C, 23D and 23E).

**Revendications**

1. Dispositif d'éclairage, en particulier pour tireuse photographique, ce dispositif comprenant une source lumineuse allongée (9) placée à l'intérieur et parallèlement aux surfaces réfléchissantes d'un réflecteur allongé (10, 11) disposé de manière à éclairer toute la surface d'un objet (P), supporté à l'écart de la source lumineuse et du réflecteur, caractérisé en ce que la source lumineuse (9) et le réflecteur (10, 11) sont agencés de manière à former des faisceaux lumineux distincts (A et B) de rayons lumineux collimatés, chacun de deux réflecteurs (12, 13), placés entre la source lumineuse et l'objet (P), réfléchissant l'un des deux faisceaux lumineux distincts (A et B) sur l'objet pour en éclairer toute la surface.

2. Dispositif d'éclairage conforme à la revendication 1, caractérisé en ce que le réflecteur (10, 11) est formé de deux surfaces réfléchissantes paraboliques allongées placées parallèlement à la dite source lumineuse (9) et auprès de celle-ci.

3. Dispositif d'éclairage conforme aux revendications 1 et 2, caractérisé en ce que la source lumineuse (9) et la surface réfléchissante parabolique (10, 11) sont placées en dehors de l'axe optique (5) du système optique de la tireuse.

4. Dispositif d'éclairage conforme aux revendications 1 à 3, caractérisé en ce qu'un moyen pour absorber ou réfléchir les rayons lumineux (A et B) est placé sur le chemin de· rayons lumineux (C) qui passent directement de la source lumineuse (9) à l'objet (P).

5. Dispositif d'éclairage conforme à la revendication 4, caractérisé en ce que le moyen pour absorber ou réfléchir les rayons lumineux (C) qui vont directement de la source lumineuse (9) à l'objet (P) est constitué par un écran (17) pour la lumière.

6. Dispositif d'éclairage conforme à la revendication 4, caractérisé en ce que le moyen pour absorber ou réfléchir les rayons (C) qui vont directement de la source lumineuse (9) à l'objet (8) est constitué par un réflecteur à jalousie (22).

7. Dispositif d'éclairage conforme à la revendication 6, caractérisé en ce que ledit réflecteur à jalousie (22) est formé de plusieurs surfaces réfléchissantes planes allongées (miroirs) (23A, 23B, 23C, 23D et 23E).

**Patentansprüche**

1. Beleuchtungsvorrichtung, insbesondere für einen photographischen Printer, mit einer langgestreckten Lichtquelle (9), die innerhalb von und parallel zu reflektierenden Flächen eines langgestreckten Reflektors (10, 11) angeordnet ist, um die gesamte Oberfläche eines im Abstand zu der Lichtquelle und dem Reflektor gelagerten Objekts (P) zu beleuchten, dadurch gekennzeichnet, daß die Lichtquelle (9) und der Reflektor (10, 11) so angeordnet sind, daß sie getrennte Strahlenbündel (A und B) von kollimierten Lichtstrahlen bilden und jeder von zwei zwischen der Lichtquelle und dem Objekt (P) angeordneten Reflektoren (12, 13) jeweils eines der getrennten Strahlenbündel (A und B) auf das Objekt lenkt, um dessen gesamte Oberfläche zu beleuchten.

2. Beleuchtungsvorrichtung nach Anspruch 1, dadurch gekennzeichnet, daß der Reflektor (10, 11) aus zwei langgestreckten reflektierenden Parabolflächen besteht, die im wesentlichen parallel zur Lichtquelle (9) und dieser benachbart angeordnet sind.

3. Beleuchtungsvorrichtung nach den Ansprüchen 1 und 2, dadurch gekennzeichnet, daß die Lichtquelle (9) und die reflektierenden Parabolflächen (10, 11) außerhalb der optischen Achse (5) der Printeroptik vorgesehen sind.

4. Beleuchtungsvorrichtung nach den Ansprüchen 1 bis 3, dadurch gekennzeichnet, daß Mittel zum Absorbieren oder Reflektieren von Lichtstrahlen (A und B) im Strahlengang der direkt zwischen der Lichtquelle (9) und dem Objekt (P) verlaufenden Strahlen (C) angeordnet sind.

5. Beleuchtungsvorrichtung nach Anspruch 4, dadurch gekennzeichnet, daß die Mittel zum Absorbieren oder Reflektieren von direkt zwischen der Lichtquelle (9) und dem Objekt (P) verlaufenden Lichtstrahlen (C) aus einer Lichtleitfläche (17) bestehen.

6. Beleuchtungsvorrichtung nach Anspruch 4, dadurch gekennzeichnet, daß die Mittel zum Absorbieren oder Reflektieren von direkt zwischen der Lichtquelle (9) und dem Objekt (P) verlaufenden Strahlen (C) aus einem jalousieartigen Reflektor (22) bestehen.

7. Beleuchtungsvorrichtung nach Anspruch 6, dadurch gekennzeichnet, daß der jalousieartige Reflektor (22) eine Anzahl von langgestreckten ebenen reflektierenden Flächen (Spiegeln) (23A, 23B, 23C, 23D und 23E) aufweist.

FIG. 2

0 010 124

FIG. 4

FIG. 5